(19) Europäisches Patentamt
European Patent Office
Office européen des brevets

(11) EP 1 114 097 B1

(12) # FASCICULE DE BREVET EUROPEEN

(45) Date de publication et mention de la délivrance du brevet:
**03.04.2002 Bulletin 2002/14**

(21) Numéro de dépôt: **99939486.9**

(22) Date de dépôt: **20.08.1999**

(51) Int Cl.$^7$: **C08K 9/02**, C08L 21/00, C09C 1/36, C01G 23/047

(86) Numéro de dépôt international:
**PCT/FR99/02023**

(87) Numéro de publication internationale:
**WO 00/11070 (02.03.2000 Gazette 2000/09)**

(54) **UTILISATION DE DIOXYDE DE TITANE COMME AGENT ANTI-UV DANS UNE COMPOSITION DE CAOUTCHOUC**

VERWENDUNG VON TITANDIOXID ALS ANTI-UV REAGENZ IN EINER KAUTSCHUKZUSAMMENSETZUNG

USE OF TITANIUM DIOXIDE AS ANTI-UV AGENT IN A RUBBER COMPOSITION

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **20.08.1998 FR 9810586**

(43) Date de publication de la demande:
**11.07.2001 Bulletin 2001/28**

(73) Titulaire: **RHODIA CHIMIE**
**92408 Courbevoie Cédex (FR)**

(72) Inventeurs:
- **ENJALBERT, Catherine**
  **F-95320 Saint Leu la Forêt (FR)**
- **LABARRE, Dominique**
  **F-92200 Neuilly sur Seine (FR)**

(74) Mandataire: **Delenne, Marc**
**Rhodia Services,**
**Direction de la Propriété Industrielle,**
**40, rue de la Haie-Coq**
**93306 Aubervilliers Cedex (FR)**

(56) Documents cités:
**EP-A- 0 649 816** **EP-A- 0 748 624**

- **DATABASE WPI Section Ch, Week 8740 Derwent Publications Ltd., London, GB; Class A60, AN 87-281912 XP002099382 & JP 62 197309 A (TOKUYAMA SODA KK), 1 septembre 1987 (1987-09-01)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

La présente invention est relative à l'utilisation comme agent anti-UV, dans des compositions de caoutchouc, de particules de dioxyde de titane particulières.

Elle est également relative aux compositions de caoutchouc ainsi obtenues.

Enfin, elle conceme également les articles finis à base de ces compositions, et notamment les enveloppes de pneumatique.

Les compositions de caoutchouc, utilisables pour la fabrication d'articles finis, comprennent généralement, entre autres, un ou plusieurs élastomères, une charge renforçante et un agent de couplage (permettant le couplage entre les élastomères et la surface de la charge renforçante).

Il est connu d'utiliser des systèmes de protection contre les UV (rayonnements ultraviolets) dans les compositions de caoutchouc, dans le but de limiter le vieillissement de ces dernières à la lumière et donc d'éviter la dégradation de leurs caractéristiques mécaniques.

Cependant, les absorbeurs UV connus ne présentent pas toujours de bonnes performances, en particulier ceux, comme les dérivés phénoliques, employés dans les compositions de caoutchouc «claires», c'est-à-dire celles ne contenant pas de noir de carbone.

L'un des buts de l'invention est donc de proposer un agent anti-UV pour les compositions de caoutchouc, efficace, ne migrant pas en surface, contrairement aux absorbeurs UV organiques, et pouvant ainsi de préférence conserver son activité protectrice dans le temps.

Un autre but de l'invention est également de pouvoir disposer d'un agent anti-UV utilisable dans les compositions de caoutchouc contenant une charge renforçante qui ne soit pas majoritairement du noir de carbone, et en particulier dans les compositions de caoutchouc «claires», c'est-à-dire celles ne contenant pas de noir de carbone : ainsi l'un des objectifs de l'invention est donc de proposer un agent anti-UV incolore, transparent, et donc qui ne tâche pas les compositions de caoutchouc «claires» dans lesquelles il serait incorporé.

Dans ces buts, la présente invention a pour objet l'utilisation comme agent anti-UV, dans une composition de caoutchouc, de particules de dioxyde de titane de taille moyenne d'au plus 80 nm, recouvertes au moins partiellement d'au moins une couche d'au moins un oxyde, hydroxyde ou oxohydroxyde métallique.

Elle a également pour objet les compositions de caoutchouc comprenant au moins un élastomère et au moins un tel agent anti-UV (ou absorbeur UV).

Enfin, un autre objet de l'invention consiste dans les articles finis à base de ces compositions de caoutchouc, notamment les enveloppes de pneumatique.

L'invention concerne d'abord l'utilisation comme agent anti-UV, dans une composition de caoutchouc, de particules de dioxyde de titane de taille moyenne d'au plus 80 nm, recouvertes au moins partiellement, de préférence totalement, d'au moins une couche d'au moins un oxyde, hydroxyde ou oxohydroxyde métallique.

En général, la composition de cette couche est choisie de telle manière qu'elle soit inerte chimiquement vis-à-vis des élastomères compris dans la composition de caoutchouc à protéger et qu'elle puisse réagir avec l'agent de couplage habituellement compris dans cette composition.

Cette couche peut ainsi être une couche d'au moins un oxyde, hydroxyde ou oxohydroxyde de silicium et/ou d'aluminium.

Elle peut ainsi être formée d'alumine.

Selon une variante préférée, elle est formée de silice ou de silicoaluminate.

Selon une autre variante préférée, elle est formée d'une couche de silice et d'hydroxyde ou oxohydroxyde d'aluminium, notamment dans des teneurs en poids de 15 % environ en $SiO_2$ et 5 % environ d'$Al_2O_3$.

En général, le rapport en poids couche / dioxyde de titane est compris entre 5 et 100 % ; il est le plus souvent d'au plus 60 % ; la masse de couche est mesurée sur les particules, mises en suspension, par fluorescence X.

Cette couche est plutôt très mince ; elle présente habituellement une épaisseur comprise entre 0,5 et 5 nm, en particulier entre 1 et 3 nm (mesurée par microscopie électronique par transmission (MET)). De plus, elle est généralement dense.

Il est à noter que lesdites particules de dioxyde de titane peuvent être recouvertes au moins partiellement:

- d'une première couche d'au moins un composé du cérium et/ou du fer, et
- d'une deuxième couche telle que décrite ci-dessus.

Ces composés du cérium et/ou du fer sont des précurseurs de l'oxyde de cérium ou de fer, c'est-à-dire qu'ils sont thermiquement décomposables en oxyde de cérium ou de fer. Il peut s'agir de sels de cérium ou de fer. Les composés du cérium sont préférés.

Les particules de dioxyde de titane employées dans la présente invention présentent une taille moyenne en nombre d'au plus 80 nm, de préférence comprise entre 20 et 70 nm (mesurée par microscopie électronique par transmission (MET)). Cette taille moyenne est plus particulièrement comprise entre 30 et 60 nm, notamment entre 40 et 50 nm.

Même si le dioxyde de titane constituant lesdites particules peut être de structure cristalline majoritairement rutile, il est, de manière avantageuse, de structure cristalline majoritairement anatase, c'est-à-dire que 50 % en poids dudit dioxyde de titane sont de structure anatase. De préférence, 80 %, voire sensiblement 100 %, en poids dudit dioxyde de titane sont de structure anatase.

Lesdites particules de dioxyde de titane possèdent, en général, une surface spécifique BET d'au moins 40 $m^2/g$, en particulier d'au moins 70 $m^2/g$, par exemple d'au moins 100 $m^2/g$; elle peut être d'au plus 250 $m^2/g$, notamment d'au plus 200 $m^2/g$. La surface spécifique BET est déterminée par adsorption d'azote conformément à la norme ASTM D 3663-78 établie à partir de la méthode de BRUNAUER - EMMET - TELLER décrite dans "The joumal of the American Chemical Society", Vol. 60, page 309, février 1938.

Les particules de dioxyde de titane utilisées dans la présente invention présentent habituellement une densité comprise entre 2,0 et 2,7.

De préférence, cette densité est comprise entre 2,3 et 2,7 lorsqu'une couche d'au moins un composé du cérium et/ou du fer est présente, et est comprise entre 2,0 et 2,4 lorsqu'une telle couche n'est pas présente.

Enfin, elles sont mises en oeuvre préférentiellement sous forme de poudre.

Les particules de dioxyde de titane utilisées dans la présente invention sont de préférence préparées par précipitation d'au moins un oxyde, hydroxyde ou oxohydroxyde métallique à la surface de particules de dioxyde de titane de taille moyenne d'au plus 80 nm, en général de structure cristalline majoritairement anatase et présentant habituellement une surface spécifique BET d'au moins 200 $m^2/g$ et une densité comprise entre 2,3 et 2,7.

Eventuellement, on précipite préalablement à la surface de ces particules de dioxyde de titane de départ au moins un composé du cérium et/ou du fer.

Ces précipitations peuvent être réalisées par :

- introduction, dans une dispersion de particules de dioxyde de titane présentant les caractéristiques ci-dessus définies, de précurseurs des composés du cérium et/ou du fer, oxydes, hydroxydes ou oxohydroxydes métalliques en général sous forme de solutions aqueuses de sels, puis,
- modification du pH pour obtenir la précipitation de ces composés, oxydes, hydroxydes ou oxohydroxydes sur les particules de dioxyde de titane.

En général, on effectue cette précipitation à une température d'au moins 50 °C.

Les particules de dioxyde de titane utilisées selon l'invention ne sont habituellement pas calcinées, c'est-à-dire qu'elles ne sont pas habituellement recouvertes d'oxydes de cérium et/ou de fer.

Les composés du cérium et/ou du fer sont en général des sels ou hydroxydes de cérium ou de fer. Pour le cérium, il peut s'agir d'un sel de cérium choisi parmi l'acétate de cérium, le sulfate de cérium ou le chlorure de cérium.

De même, pour le dépôt du fer, il peut s'agir d'un chlorure, d'un sulfate ou d'un acétate de fer.

On emploie le plus souvent de l'acétate de cérium et/ou du chlorure de fer.

En général, la précipitation des composés du cérium et/ou du fer est obtenue pour un pH compris entre 4 et 10.

Il est possible de chauffer la dispersion de particules au cours de cette étape.

Dans le cas de la précipitation de silice et d'un hydroxyde ou oxohydroxyde d'aluminium, la précipitation peut être réalisée à pH acide ou basique. Le pH peut être contrôler par l'ajout d'un acide tel que l'acide sulfurique ou par l'introduction simultanée et/ou alternative d'un composé alcalin du silicium et d'un composé acide de l'aluminium. De préférence, dans ce cas, le pH est compris entre 8 et 10.

On peut précipiter la silice à partir d'un sel de silicium tel qu'un silicate alcalin.

L'hydroxyde ou oxohydroxyde d'aluminium peut être précipité à partir d'un sel d'aluminium tel que le sulfate d'alumine, l'aluminate de soude, le chlorure basique d'aluminium, l'hydroxyde d'aluminium diacétate.

On peut, après la précipitation, récupérer et laver, une ou plusieurs fois, les particules obtenues à la suite du traitement avant de les sécher ou, de préférence, de les remettre en dispersion. Cette étape peut être réalisée par centrifugation et lavage ou par lavage par ultrafiltration. Le pH de l'eau de lavage est avantageusement de l'ordre de 5,5. Puis, éventuellement après un ou plusieurs autres lavages du même type, les particules sont de préférence remises en dispersion, en général dans de l'eau, puis séchées, habituellement à une température inférieure à 110°C ; de manière avantageuse, cette étape de séchage consiste en un séchage d'une suspension contenant de préférence 8 à 30 % en poids desdites particules à l'aide d'un atomiseur, par exemple un atomiseur de type APV, avec une température de sortie généralement inférieure à 110 °C.

Les particules de dioxyde de titane de départ présentent une taille moyenne en nombre d'au plus 80 nm, de préférence comprise entre 20 et 70 nm (mesurée par microscopie électronique par transmission (MET)). Cette taille moyenne est plus particulièrement comprise entre 30 et 60 nm, notamment entre 40 et 50 nm.

Même si le dioxyde de titane constituant lesdites particules de départ peut être de structure cristalline majoritairement rutile, il est, de manière avantageuse, de structure cristalline majoritairement anatase, c'est-à-dire que 50 % en poids dudit dioxyde de titane sont de structure anatase. De préférence, 80 %, voire sensiblement 100 %, en poids dudit dioxyde de titane sont de structure anatase.

Les particules de départ possèdent habituellement une surface spécifique BET d'au moins 200 $m^2/g$, par exemple d'au moins 250 $m^2/g$.

Leur densité est en général comprise entre 2,3 et 2,7.

Cette densité est notamment donnée par la formule suivante :

$$\text{densité} = \frac{1}{(1/\rho) + Vi}$$

dans laquelle :

- ρ est la densité de l'anatase, soit 3,8,
- Vi est le volume apporté par les pores intra particules, il est mesuré par la méthode BJH. On entend par volume mesuré par la méthode BJH, la volume mesuré à partir de la méthode BARRETT-JOYNER-HELENDA décrite dans l'article de l'ouvrage Techniques de l'Ingénieur, et intitulé "Texture des solides poreux ou divisés", p.3645-1 à 3645-13.

Pour mesurer le volume apporté par les pores intra particules des particules selon l'invention, lorsqu'elles se présentent sous forme de dispersion, il est essentiel de suivre le protocole de mesure qui consiste à éliminer la phase liquide de la dispersion puis à sécher les particules sous vide à une température de 150°C pendant au moins 4 heures.

De telles particules de départ peuvent être obtenues par hydrolyse d'au moins un composé du titane A en présence d'au moins un composé B choisi parmi:

(i) les acides phosphoriques organiques de formules suivantes :

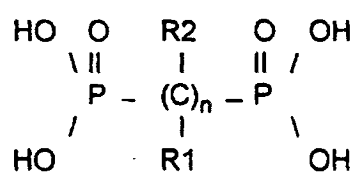

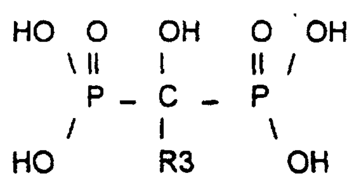

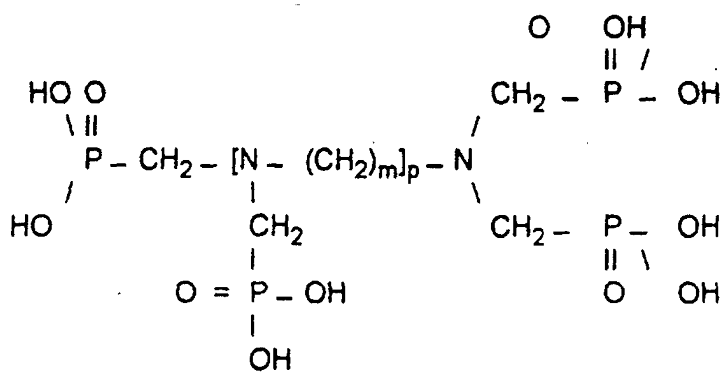

dans lesquelles, n et m sont des nombres entiers compris entre 1 et 6, p est un nombre entier compris entre 0 et 5, R1, R2, R3, identiques ou différents, représentant un groupement hydroxyle, amino, aralkyl, aryl, alkyl ou l'hydrogène,
(ii) les acides qui présentent :

- soit un groupement carboxyle et au moins deux groupements hydroxyles et/ou amines,
- soit au moins deux groupements carboxyles et au moins un groupement hydroxyle et/ou amine,

(iii) les composés capables de libérer des ions sulfates en milieu acide,
(iv) les sels des acides décrits ci-dessus,

et en présence de germes de dioxyde de titane, habituellement anatase, présentant avantageusement une taille d'au plus 8 nm et dans un rapport pondéral ($TiO_2$ présent dans les germes) / (titane présent avant introduction des germes dans le milieu d'hydrolyse, exprimé en $TiO_2$) compris de préférence entre 0,01 et 3 %.

La solution de départ, destinée à être hydrolysée, est de préférence totalement aqueuse ; éventuellement on peut ajouter un autre solvant, un alcool par exemple, à condition que le composé du titane A et le composé B utilisés soient alors substantiellement solubles dans ce mélange.

A titre de composé du titane A, on utilise en général un composé choisi parmi les halogénures, les oxyhalogénures, les alcoxydes de titane, les sulfates, plus particulièrement les sulfates synthétiques.

On entend par sulfates synthétiques des solutions de sulfates de titanyle réalisées par échange d'ions à partir de solutions de chlorure de titane très pures ou par réaction d'acide sulfurique sur un alcoxyde de titane.

On opère de préférence avec des composés du titane du type halogénure ou oxyhalogénure de titane. Les halogénures ou les oxyhalogénures de titane plus particulièrement utilisés dans la présente invention sont les fluorures, les chlorures, les bromures et les iodures (respectivement les oxyfluorures, les oxychlorures, les oxybromures et les oxyiodures) de titane.

Selon un mode particulièrement préféré, le composé du titane est l'oxychlorure de titane $TiOCl_2$.

La quantité de composé du titane A présente dans la solution à hydrolyser n'est pas critique.

La solution initiale contient en outre au moins un composé B tel que défini précédemment. A titre d'exemples non limitatifs de composés B, on peut citer notamment :

- les acides hydroxypolycarboxyliques, et plus particulièrement les acides hydroxydi- ou hydroxytricarboxyliques tels que l'acide citrique, l'acide maléique et l'acide tartrique,
- les acides (polyhydroxy)monocarboxyliques, comme par exemple l'acide glucoheptonique et l'acide gluconique,
- les acides poly(hydroxycarboxyliques), comme par exemple l'acide tartrique,
- les monoacides dicarboxyliques et leurs amides correspondantes, comme par exemple l'acide aspartique, l'asparagine et l'acide glutamique,
- les aminoacides monocarboxyliques, hydroxylés ou non, comme par exemple la lysine, la sérine et la thréonine,
- l'aminotriphosphonate de méthylène, l'éthylènediaminotétraphosphonate de méthylène, le triéthylènetétraaminohexaphosphonate de méthylène, le tétraéthylènepentaaminoheptaphosphonate de méthylène, le pentaéthylènehexaaminooctaphosphonate de méthylène,
- le diphosphonate de méthylène ; de 1,1' éthylène ; de 1,2 éthylène ; de 1,1' propylène ; de 1,3 propylène ; de 1,6 hexaméthylène ; le 2,4 dihydroxypentaméthylène - 2,4 diphosphonate ; le 2,5 dihydroxyhexaméthylène - 2,5 disphosphonate ; le 2,3 dihydroxybutylène - 2,3 diphosphonate ; le 1 hydroxybenzyle - 1,1' diphosphonate ; le 1 aminoéthylène 1-1' diphosphonate ; l'hydroxyméthylène diphosphonate ; le 1 hydroxyéthylène 1,1' diphosphonate ; le 1 hydroxypropylène 1-1' diphosphonate ; le 1 hydroxybutylène 1-1' diphosphonate ; le 1 hydroxyhexaméthylène - 1,1' diphospho-nate.

Comme déjà indiqué, il est également possible d'utiliser à titre de composé B tous les sels des acides précités. En particulier, ces sels sont soit des sels alcalins, et plus particulièrement des sels de sodium, soit des sels d'ammonium.

Ces composés peuvent être choisis aussi parmi l'acide sulfurique et les sulfates d'ammonium, de potassium,...

Les composés B tels que définis ci-dessus sont généralement des composés hydrocarbonés de type aliphatique. Dans ce cas, la longueur de la chaîne principale hydrocarbonée n'excède pas de préférence 15 atomes de carbone, par exemple 10 atomes de carbone. Le composé B préféré est l'acide citrique.

La quantité de composé B n'est pas critique. D'une manière générale, la concentration molaire du composé B par rapport à celle du composé du titane A est comprise entre 0,2 et 10 % et, de préférence, entre 1 et 5 %.

Enfin la solution de départ comprend des germes de dioxyde de titane utilisés d'une manière spécifique.

Ainsi, les germes de dioxyde de titane utilisés présentent avantageusement une taille inférieure à 8 nm, mesurée par diffraction X. De préférence, on utilise des germes de dioxyde de titane présentant une taille comprise entre 3 et 5 nm.

Ensuite, le rapport pondéral du dioxyde de titane présent dans les germes sur le titane présent dans le milieu d'hydrolyse avant introduction des germes - c'est-à-dire apporté par le composé du titane A - et exprimé en $TiO_2$ est de préférence compris entre 0,01 et 3 %. Ce rapport peut être compris entre 0,05 et 1,5 %. La réunion de ces deux conditions sur les germes (taille et rapport pondéral) associée au procédé tel que décrit précédemment permet de contrôler précisément la taille finale des particules de dioxyde de titane en associant à un taux de germes une taille de particule.

On utilise généralement des germes de dioxyde de titane sous forme anatase de manière à induire la précipitation du dioxyde de titane sous forme anatase. Habituellment, du fait de leur petite taille, ces germes se présentent plutôt sous la forme d'anatase mal cristallisé. Les germes se présentent habituellement sous la forme d'une suspension aqueuse constituée de dioxyde de titane. Ils peuvent être généralement obtenus de manière connue par un procédé de neutralisation d'un sel de titane par une base.

L'étape suivante consiste à réaliser l'hydrolyse de cette solution de départ par tout moyen connu de l'homme du métier et en général par chauffage. Dans ce dernier cas, l'hydrolyse peut de préférence être effectuée à une température supérieure ou égale à 70 °C. On peut aussi travailler dans un premier temps à une température inférieure à la température d'ébullition du milieu, puis maintenir le milieu d'hydrolyse en palier à la température d'ébullition.

Une fois l'hydrolyse réalisée, les particules de dioxyde de titane obtenues sont récupérées par séparation du solide précipité des eaux mères avant d'être redispersées dans un milieu liquide de manière à obtenir une dispersion de dioxyde de titane. Ce milieu liquide peut être acide ou basique ; il s'agit de préférence d'une solution basique, par exemple d'une solution aqueuse de soude. C'est à partir de cette dispersion que l'étape de précipitation des oxydes, hydroxydes ou oxohydroxydes métalliques, telle qu'indiquée plus haut, sera réalisée.

Selon une variante particulière, après la récupération des particules obtenues à la suite de l'hydrolyse et avant leur remise en dispersion, on neutralise les particules et on leur fait subir au moins un lavage. Les particules peuvent être récupérées par exemple par centrifugation de la solution issue de l'hydrolyse ; elles sont ensuite neutralisées par une base, par exemple une solution d'ammoniaque ou de soude, puis lavées en les redispersant dans une solution aqueuse ; enfin les particules sont séparées de la phase aqueuse de lavage. Après éventuellement un ou plusieurs autres lavages du même type, les particules sont remises en dispersion dans une solution liquide ou basique, avant l'étape de précipitation des oxydes, hydroxydes ou oxohydroxydes métalliques.

La masse de particules de dioxyde de titane mise en oeuvre dans l'invention est habituellement comprise entre 0,5 et 8 %, de préférence entre 1 et 5 %, de la masse totale de la composition de caoutchouc.

Les-compositions de caoutchouc dans lesquelles sont utilisées, à titre d'agent anti-UV, lesdites particules de dioxyde de titane sont en général à base d'un ou plusieurs élastomères.

Plus particulièrement, parmi les élastomères convenables, on peut citer les élastomères présentant une température de transistion vitreuse comprise entre -150 et +20 °C.

A titre d'élastomères possibles, on peut citer, notamment, les élastomères diéniques.

Par exemple, on peut citer le caoutchouc naturel, les polymères ou copolymères dérivant de monomères aliphatiques ou aromatiques, comprenant au moins une insaturation (tels que, notamment, l'éthylène, le propylène, le butadiène, l'isoprène, le styrène), le polyacrylate de butyle, ou leurs associations ; on peut également citer les élastomères silicones et les élastomères halogénés.

Les compositions de caoutchouc sont vulcanisables au soufre.

L'invention vise également les compositions de caoutchouc comprenant en outre au moins une charge renforçante (par exemple de la silice précipitée, de l'alumine et/ou du noir de carbone) et, éventuellement, au moins un agent de couplage et/ou au moins un agent de recouvrement.

De préférence, la composition de caoutchouc comprend de la silice précipitée, avantageusement très dispersible, à titre de charge renforçante.

Cette charge renforçante est, en général, formée au moins majoritairement en poids par de la silice précipitée, de préférence de la silice précipitée très dispersible, par exemple telle que décrite dans les demandes EP 0520862, WO95/09127, WO 95/09128.

L'invention est d'autant plus avantageuse que la composition de caoutchouc est une composition «claire», c'est-à-dire qu'elle ne contient pas de noir de carbone.

La composition de caoutchouc peut également comprendre, entre autres, un agent anti-oxydant organique.

L'invention est également relative aux articles finis à base des compositions de caoutchouc décrites précédemment. On peut citer, à titre d'articles finis, les enveloppes de pneumatique, en particulier les flancs et la bande de roulement de pneumatique, les semelles de chaussure ...

Les exemples suivants illustrent l'invention sans toutefois en limiter la portée.

EXEMPLE 1

Préparation de particules de dioxyde de titane de taille moyenne égale à 60 nm, avec traitement de surface

1- Hydrolyse

On ajoute successivement à 394,7 g d'une solution d'oxychlorure de titane à 1,9 mol/kg :

- 42,02 g d'acide chlorhydrique à 36 %,
- 4,73 g d'acide citrique,
- 574,1 g d'eau épurée,
- 5,68 g (0,1 %/$TiO_2$) d'une suspension contenant 1,06 % en poids de germes d'anatase ayant une taille comprise entre 5 et 6 nm.

Le mélange est porté à ébullition et y est maintenu pendant 3 h.

2- Récupération des particules et remise en dispersion

La solution est ensuite filtrée et les particules obtenues sont lavées à l'eau jusqu'à élimination complète des chlorures. Elles sont ensuite redispersées à pH 9 (contrôlé par l'ajout de soude), la dispersion obtenue ayant un extrait sec de 20 % en poids.

Cette dispersion est stable. La taille moyenne des particules mesurée par MET est de 60 nm. L'analyse par diffraction X indique que les particules sont à base de dioxyde de titane uniquement sous forme anatase.

Leur surface spécifique BET est de 300 $m^2$/g.

Leur densité est de 2,52 (Vi = 0,14 $cm^3$/g).

3- Traitement de surface des particules

On introduit 750 g de la dispersion de départ dans un réacteur muni d'une agitation. Puis, on ajoute 750 g d'eau épurée et on élève la température jusqu'à 90 °C. Le pH de la dispersion est ajusté à 9 par ajout de soude.

On introduit tout d'abord de façon continue et simultanément une solution de silicate de sodium (solution à 335 g/l de $SiO_2$) contenant l'équivalent de 22,5 g de $SiO_2$ et une solution d'acide sulfurique à 80 g/l dans une quantité telle que le pH est maintenu à 9. Le débit de la solution de silicate de sodium est fixé à 2 ml/min. On observe ensuite un temps de mûrissement de 1 h à 90 °C.

On introduit ensuite, à pH 9 et à 90 °C, de façon continue, une solution aqueuse d'aluminate de sodium (solution à 240 g/l en $Al_2O_3$) contenant l'équivalent de 7,5 g de $Al_2O_3$. Le débit de la solution d'aluminate est de 2 ml/min, le pH est régulé à 9 par introduction simultanée d'une solution aqueuse d'acide sulfurique 6N.

Lorsque les réactifs ont été introduits, on effectue un mûrissement de 2 h à 90 °C, puis la dispersion est refroidie.

La dispersion ainsi préparée est centrifugée. Le gâteau alors obtenu est lavé trois fois avec de l'eau puis est redispersé dans de l'eau. Le pH de la dispersion obtenue est d'environ 7,7 et elle présente un extrait sec de 10 % en poids. Puis la dispersion est séchée au moyen d'un atomiseur de type APV, en configuration turbine, la température d'entrée étant de 250 °C, la température de sortie de 90 °C et le débit d'alimentation d'environ 20 kg/h.

4- Caractéristiques des particules obtenues

La taille moyenne des particules mesurée par MET est de 60 nm.

Leur surface spécifique BET est de 135 $m^2$/g.

Le taux pondéral de $SiO_2$, mesuré par fluorescence X, est de 14,9 %, celui de $Al_2O_3$ de 5 % par rapport au dioxyde de titane.

La densité des particules préparées est de 2,15.

<u>EXEMPLE 2</u>

Préparation de particules de dioxyde de titane de taille moyenne égale à 45 nm, avec traitement de surface

1- Hydrolyse

On ajoute successivement à 394,7 g d'une solution d'oxychlorure de titane à 1,9 mol/kg :

- 42,02 g d'acide chlorhydrique à 36 %,
- 4,73 g d'acide citrique,

- 574,1 g d'eau épurée,
- 11,36 g (0,2 %/$TiO_2$) d'une suspension contenant 1,06 % en poids de germes d'anatase ayant une taille comprise entre 5 et 6 nm.

Le mélange est porté à ébullition et y est maintenu pendant 3 h.

2- Récupération des particules et remise en dispersion

La solution est ensuite filtrée et les particules obtenues sont lavées à l'eau jusqu'à élimination complète des chlorures. Elles sont ensuite redispersées à pH 9 (contrôlé par l'ajout de soude), la dispersion obtenue ayant un extrait sec de 20 % en poids.

Cette dispersion est stable. La taille moyenne des particules mesurée par MET est de 60 nm. L'analyse par diffraction X indique que les particules sont à base de dioxyde de titane uniquement sous forme anatase.

Leur surface spécifique BET est de 300 $m^2/g$.

Leur densité est de 2,52 (Vi = 0,14 $cm^3/g$)

3- Traitement de surface des particules

On introduit 750 g de la dispersion de départ dans un réacteur muni d'une agitation. Puis, on ajoute 750 g d'eau épurée et on élève la température jusqu'à 90 °C. Le pH de la dispersion est ajusté à 9 par ajout de soude.

On introduit tout d'abord de façon continue et simultanément une solution de silicate de sodium (solution à 335 g/l de $SiO_2$) contenant l'équivalent de 22,5 g de $SiO_2$ et une solution d'acide sulfurique à 80 g/l dans une quantité telle que le pH est maintenu à 9. Le débit de la solution de silicate de sodium est fixé à 2 ml/min. On observe ensuite un temps de mûrissement de 1 h à 90 °C.

On introduit ensuite, à pH 9 et à 90 °C, de façon continue, une solution aqueuse d'aluminate de sodium (solution à 240 g/l en $Al_2O_3$) contenant l'équivalent de 7,5 g de $Al_2O_3$. Le débit de la solution d'aluminate est de 2 ml/min, le pH est régulé à 9 par introduction simultanée d'une solution aqueuse d'acide sulfurique 6N.

Lorsque les réactifs ont été introduits, on effectue un mûrissement de 2 h à 90 °C, puis la dispersion est refroidie.

La dispersion ainsi préparée est centrifugée. Le gâteau alors obtenu est lavé trois fois avec de l'eau puis est redispersé dans de l'eau. Le pH de la dispersion obtenue est d'environ 7,7 et elle présente un extrait sec de 10 % en poids. Puis la dispersion est séchée au moyen d'un atomiseur de type APV, en configuration turbine, la température d'entrée étant de 250 °C, la température de sortie de 90 °C et le débit d'alimentation d'environ 20 kg/h.

4- Caractéristiques des particules obtenues

La taille moyenne des particules mesurée par MET est de 45 nm.

Leur surface spécifique BET est de 150 $m^2/g$.

Le taux pondéral de $SiO_2$, mesuré par fluorescence X, est de 14,9 %, celui de $Al_2O_3$ de 5 % par rapport au dioxyde de titane.

La densité des particules préparées est de 2,15.

<u>EXEMPLE 3</u>

On prépare les formulations pour caoutchouc industriel suivantes (tableau 1 : compositions en parties, en poids) contenant ou non des particules de dioxyde de titane obtenues dans l'exemple1.

Tableau 1

| | mélange 1 | mélange 2 | mélange 3 | mélange 4 | mélange 5 |
|---|---|---|---|---|---|
| SBR(1) | 100 | 100 | 100 | 100 | 100 |
| charge $SiO_2$(2) | 50 | 50 | 50 | 50 | 50 |
| silane Si69(3) | 5 | 5 | 5 | 5 | 5 |

(1) Copolymère styrène butadiène type Buna VSL 5525-0

(2) Charge formée par une silice précipitée de l'example 12 de EP-A-0520862

(3) Agent de couplage charge/caoutchouc (commercialisé par la société Dégussa)

Tableau 1 (suite)

| | mélange 1 | mélange 2 | mélange 3 | mélange 4 | mélange 5 |
|---|---|---|---|---|---|
| $TiO_2$(60 nm)(4) | | 1 | 2 | | 2 |
| anti-oxydant(5) | | | | 2 | 2 |

(4) Agent anti-UV obtenu à l'issue de l'exemple 1 précédent

(5) Agent anti-oxydant phénolique non tâchant dénommé Wingstay L

Les mélanges sont effectués en Brabender de laboratoire, puis préssés sous forme de plaque de 2 mm d'épaisseur à 150 °C pendant 50 minutes.

Le vieillissement des formulations est mené pendant 89 heures sous UV-A (à l'aide d'un appareil à UV CON ATLAS), une seule face étant exposée. La température dans l'enceinte est de 57 °C.

L'étude du comportement en traction est effectuée à 8 mm/min sur des formulations exposées ou non aux UV-A.

Le tableau 2 ci-dessous regroupe les valeurs de contrainte à la rupture (σ rupt.) et de déformation (allongement) à la rupture (ε rupt.), ainsi que les valeurs de contrainte à 10 % de déformation (σ 10%), l'évolution des valeurs de contrainte à 10 % de déformation illustrant le durcissement surfacique du matériau.

Les valeurs portant la mention (UV) sont celles des formulations exposées aux UV-A pendant 89 heures à 57 °C.

Les valeurs portant la mention (0) sont celles des formulations non exposées aux UV-A (ou témoins), ces formulations ayant cependant passé aussi 89 heures à 57 °C mais dans l'obscurité.

Tableau 2

| | ε rupt. (0) | ε rupt. (UV) | σ rupt. (0) | σ rupt. (UV) | σ 10% (0) | σ 10% (UV) |
|---|---|---|---|---|---|---|
| mélange 1 | 474 | 30 | 2,45 | 1,79 | 1,22 | 2,26 |
| mélange 2 | 421 | 148 | 2,25 | 2,45 | 1,21 | 1,91 |
| mélange 3 | 440 | 239 | 2,24 | 2,34 | 1,29 | 1,75 |
| mélange 4 | 574 | 42 | 2,76 | 1,96 | 1,47 | 2,24 |
| mélange 5 | 447 | 307 | 2,03 | 2,10 | 1,25 | 1,78 |

*ε rupt. exprimée en %*

*σ rupt. et σ 10% exprimées en MPa*

*épaisseur éprouvette (échantillon) = 1,6 mm*

On constate l'efficacité comme agent anti-UV des particules de dioxyde de titane obtenues dans l'exemple 1.

EXEMPLE 4

On prépare les formulations pour caoutchouc industriel suivantes (tableau 3 : compositions en parties, en poids) contenant ou non des particules de dioxyde de titane obtenues dans l'exemple1 ($TiO_2$ (60 nm)) ou dans l'exemple 2 ($TiO_2$ (45 nm))

Tableau 3

| | mélange 1 | mélange 2 | mélange 3 | mélange 4 | mélange 5 |
|---|---|---|---|---|---|
| SBR(1) | 100 | 100 | 100 | 100 | 100 |
| charge $SiO_2$(2) | 50 | 50 | 50 | 50 | 50 |
| silane Si69(3) | 5 | 5 | 5 | 5 | 5 |
| $TiO_2$(60 nm)(4) | | 2 | 4 | | |

(1) Copolymère styrène butadiène type Buna VSL 5525-0

(2) Charge formée par une silice précipitée de l'example 12 de EP-A-0520862

(3) Agent de couplage charge/caoutchouc (commercialisé par la société Dégussa)

(4) Agent anti-UV obtenu à l'issue de l'exemple 1 précédent

Tableau 3 (suite)

| | mélange 1 | mélange 2 | mélange 3 | mélange 4 | mélange 5 |
|---|---|---|---|---|---|
| $TiO_2$(45 nm)(5) | | | | 2 | 4 |
| anti-oxydant(6) | 2 | 2 | 2 | 2 | 2 |

(5) Agent anti-UV obtenu à l'issue de l'exemple 2 précédent

(6) Agent anti-oxydant phénolique non tâchant dénommé Wingstay L

Les mélanges sont effectués en Brabender de laboratoire, puis préssés sous forme de plaque de 2 mm d'épaisseur à 150 °C pendant 50 minutes.

Le vieillissement des formulations est mené pendant 89 heures sous UV-A (à l'aide d'un appareil à UV CON ATLAS), une seule face étant exposée. La température dans l'enceinte est de 57 °C.

L'étude du comportement en traction est effectuée à 8 mm/min sur des formulations exposées ou non aux UV-A.

Le tableau 4 ci-dessous regroupe les valeurs de contrainte à la rupture (σ rupt.) et de déformation (allongement) à la rupture (ε rupt.), ainsi que les valeurs de contrainte à 10 % de déformation (σ 10%), l'évolution des valeurs de contrainte à 10 % de déformation illustrant le durcissement surfacique du matériau.

Les valeurs portant la mention (UV) sont celles des formulations exposées aux UV-A pendant 89 heures à 57 °C.

Les valeurs portant la mention (0) sont celles des formulations non exposées aux UV-A (ou témoins), ces formulations ayant cependant passé aussi 89 heures à 57 °C mais dans l'obscurité.

Tableau 4

| | ε rupt. (0) | ε rupt. (UV) | σ rupt. (0) | σrupt. (UV) | σ 10% (0) | σ 10% (UV) |
|---|---|---|---|---|---|---|
| mélange 1 | 561 | 35 | 1,65 | 2,14 | 1,30 | 2,60 |
| mélange 2 | 445 | 331 | 1,81 | 2,46 | 1,27 | 2,00 |
| mélange 3 | 520 | 320 | 1,83 | 2,12 | 1,32 | 1,83 |
| mélange 4 | 440 | 305 | 1,66 | 1,89 | 1,19 | 1,86 |
| mélange 5 | 507 | 306 | 2,07 | 2,48 | 1,35 | 2,01 |

*ε rupt.exprimée en %*

*σ rupt et σ 10% exprimées en MPa*

*épaisseur éprouvette (échantillon) = 1,2 mm*

On constate que les performances obtenues sont assez similaires entre les deux produits de taille moyenne différente et que l'augmentation de concentration n'apporte pas de résultats significativement meilleurs.

Cependant, il est à noter que la transparence des formulations contenant le dioxyde de titane ayant une taille moyenne de 45 nm est un peu plus élevée que celle des formulations contenant le dioxyde de titane ayant une taille moyenne de 60 nm.

## Revendications

1. Utilisation comme agent anti-UV, dans une composition de caoutchouc, de particules de dioxyde de titane de taille moyenne d'au plus 80 nm, recouvertes au moins partiellement d'une couche d'au moins un oxyde, hydroxyde ou oxohydroxyde métallique.

2. Utilisation selon la revendication 1, **caractérisée en ce que** ladite couche est une couche d'au moins un oxyde, hydroxyde ou oxohydroxyde de silicium et/ou d'aluminium.

3. Utilisation selon la revendication 2, **caractérisée en ce que** ladite couche est formée de silice, de silicoaluminate ou d'alumine.

4. Utlisation selon l'une des revendications 1 à 3, **caractérisée en ce que** lesdites particules de dioxyde de titane présentent une taille moyenne comprise entre 20 et 70 nm, en particulier entre 30 et 60 nm.

5. Utilisation selon l'une des revendications 1 à 4, **caractérisée en ce que** ledioxyde de titane est de structure cristalline majoritairement anatase.

6. Utilisation selon l'une des revendications 1 à 5, **caractérisée en ce que** lesdites particules de dioxyde de titane présentent une surface spécifique BET d'au moins 40 $m^2/g$, en particulier d'au moins 70 $m^2/g$.

7. Utilisation selon l'une des revendications 1 à 6, **caractérisée en ce que** les dites particules sont mises en oeuvre sous forme de poudre.

8. Utilisation selon l'une des revendications 1 à 7, **caractérisée en ce que** ladite composition de caoutchouc est à base d'au moins un élastomère, ledit élastomère présentant de préférence une température de transistion vitreuse comprise entre -150 et +20 °C.

9. Utilisation selon l'une des revendications 1 à 8, **caractérisée en ce que** ladite composition de caoutchouc comprend en outre au moins une charge renforçante et, éventuellement, au moins un agent de couplage et/ou au moins un agent de recouvrement.

10. Utilisation selon l'une des revendications 1 à 9, **caractérisée en ce que** ladite composition de caoutchouc ne contient pas de noir de carbone.

11. Utilisation selon l'une des revendications 1 à 10, **caractérisée en ce que** ladite composition de caoutchouc comprend au moins un agent anti-oxydant organique.

12. Utilisation selon l'une des revendications 1 à 11, **caractérisée en ce que** la masse de particules de dioxyde de titane mise en oeuvre est comprise entre 0,5 et 8 %, de préférence entre 1 et 5 %, de la masse totale de ladite composition de caoutchouc.

13. Composition de caoutchouc à base d'au moins un élastomère, comprenant au moins un agent anti-UV, **caractérisée en ce que** ledit agent anti-UV consiste en des particules de dioxyde de titane de taille moyenne d'au plus 80 nm, recouvertes au moins partiellement d'une couche d'au moins un oxyde, hydroxyde ou oxohydroxyde métallique.

14. Composition selon la revendications 13, **caractérisée en ce que** ladite couche est une couche d'au moins un oxyde, hydroxyde ou oxohydroxyde de silicium et/ou d'aluminium.

15. Composition selon la revendication 14, **caractérisée en ce que** ladite couche est formée de silice, de silicoaluminate ou d'alumine.

16. Composition selon l'une des revendications 13 à 15, **caractérisée en ce que** lesdites particules de dioxyde de titane présentent une taille moyenne comprise entre 20 et 70 nm, en particulier entre 30 et 60 nm.

17. Composition selon l'une des revendications 13 à 16, **caractérisée en ce que** ledioxyde de titane est de structure cristalline majoritairement anatase.

18. Composition selon l'une des revendications 13 à 17, **caractérisée en ce que** lesdites particules de dioxyde de titane présentent une surface spécifique BET d'au moins 40 $m^2/g$, en particulier d'au moins 70 $m^2/g$.

19. Composition selon l'une des revendications 13 à 18, **caractérisée en ce que** ladite composition est à base d'au moins un élastomère présentant une température de transistion vitreuse comprise entre -150 et +20 °C.

20. Composition selon l'une des revendications 13 à 19, **caractérisée en ce que** ladite composition comprend au moins une charge renforçante et, éventuellement, au moins un agent de couplage et/ou au moins un agent de recouvrement.

21. Composition selon l'une des revendications 13 à 20, **caractérisée en ce que** ladite composition ne contient pas de noir de carbone.

22. Composition selon l'une des revendications 13 à 21, **caractérisée en ce que** ladite composition comprend au

moins un agent anti-oxydant organique.

**23.** Composition selon l'une des revendications 13 à 22, **caractérisée en ce que** ladite composition présente une teneur pondérale en particules de dioxyde de titane comprise entre 0,5 et 8 %, de préférence entre 1 et 5 %.

**24.** Article fini à base d'au moins une composition telle que définie dans l'une des revendications 13 à 23.

**Patentansprüche**

**1.** Verwendung als Anti-UV-Mittel in einer Kautschukzusammensetzung von Titandioxidteilchen mit einer durchschnittlichen Größe von höchstens 80 nm, die zumindest teilweise mit einer Schicht aus wenigstens einem Metalloxid, -hydroxid oder -oxohydroxid bedeckt sind.

**2.** Verwendung gemäß Anspruch 1, **dadurch gekennzeichnet, daß** die Schicht eine Schicht aus wenigstens einem Oxid, Hydroxid oder Oxohydroxid von Silicium und/oder Aluminium ist.

**3.** Verwendung gemäß Anspruch 2, **dadurch gekennzeichnet, daß** die Schicht aus Siliciumdioxid, Silicoaluminat oder Aluminiumoxid gebildet wird.

**4.** Verwendung gemäß einem der Ansprüche 1 bis 3, **dadurch gekennzeichnet, daß** die Titandioxidteilchen eine durchschnittliche Größe zwischen 20 und 70 nm, insbesondere zwischen 30 und 60 nm, besitzen.

**5.** Verwendung gemäß einem der Ansprüche 1 bis 4, **dadurch gekennzeichnet, daß** das Titandioxid vorwiegend eine Anatas-Kristallstruktur besitzt.

**6.** Verwendung gemäß einem der Ansprüche 1 bis 5, **dadurch gekennzeichnet, daß** die Titandioxidteilchen eine spezifische BET-Oberfläche von zumindest 40 $m^2/g$, insbesondere zumindest 70 $m^2/g$, besitzen.

**7.** Verwendung gemäß einem der Ansprüche 1 bis 6, **dadurch gekennzeichnet, daß** die Teilchen in Pulverform eingesetzt werden.

**8.** Verwendung gemäß einem der Ansprüche 1 bis 7, **dadurch gekennzeichnet, daß** die Kautschukzusammensetzung auf zumindest einem Elastomeren basiert, wobei dieses Elastomere vorzugsweise eine Glasübergangstemperatur zwischen -150 und +20°C besitzt.

**9.** Verwendung gemäß einem der Ansprüche 1 bis 8, **dadurch gekennzeichnet, daß** die Kautschukzusammensetzung außerdem zumindest einen verstärkenden Füllstoff und gegebenenfalls zumindest ein Kupplungsmittel und/oder zumindest ein Überzugsmittel umfaßt.

**10.** Verwendung gemäß einem der Ansprüche 1 bis 9, **dadurch gekennzeichnet, daß** die Kautschukzusammensetzung keinen Ruß enthält.

**11.** Verwendung gemäß einem der Ansprüche 1 bis 10, **dadurch gekennzeichnet, daß** die Kautschukzusammensetzung wenigstens ein organisches Antioxidationsmittel umfaßt.

**12.** Verwendung gemäß einem der Ansprüche 1 bis 11, **dadurch gekennzeichnet, daß** die eingesetzte Menge der Titandioxidteilchen zwischen 0,5 und 8%, vorzugsweise zwischen 1 und 5%, der Gesamtmasse der Kautschukzusammensetzung beträgt.

**13.** Kautschukzusammensetzung auf Basis zumindest eines Elastomeren, umfassend wenigstens ein Anti-UV-Mittel, **dadurch gekennzeichnet, daß** das Anti-UV-Mittel aus Titandioxidteilchen mit einer durchschnittlichen Größe von höchstens 80 nm besteht, die zumindeset teilweise mit einer Schicht aus wenigstens einem Metalloxid, -hydroxid oder -oxohydroxid bedeckt sind.

**14.** Zusammensetzung gemäß Anspruch 13, **dadurch gekennzeichnet, daß** die Schicht eine Schicht aus wenigstens einem Oxid, Hydroxid oder Oxohydroxid von Silicium und/oder Aluminium ist.

**15.** Zusammensetzung gemäß Anspruch 14, **dadurch gekennzeichnet, daß** die Schicht aus Siliciumdioxid, Silicoaluminat oder Aluminiumoxid gebildet wird.

**16.** Zusammensetzung gemäß einem der Ansprüche 13 bis 15, **dadurch gekennzeichnet, daß** die Titandioxidteilchen eine durchschnittliche Größe zwischen 20 und 70 nm, und insbesondere zwischen 30 und 60 nm, besitzen.

**17.** Zusammensetzung gemäß einem der Ansprüche 13 bis 16, **dadurch gekennzeichnet, daß** das Titandioxid vorwiegend eine Anatas-Kristallstruktur besitzt.

**18.** Zusammensetzung gemäß einem der Ansprüche 13 bis 17, **dadurch gekennzeichnet, daß** die Titandioxidteilchen eine spezifische BET-Oberfläche von zumindeset 40 $m^2/g$, insbesondere zumindest 70 $m^2/g$, besitzen.

**19.** Zusammensetzung gemäß einem der Ansprüche 13 bis 18, **dadurch gekennzeichnet, daß** die Zusammensetzung auf wenigstens einem Elastomeren basiert, das eine Glasübergangstemperatur zwischen -150 und +20°C besitzt.

**20.** Zusammensetzung gemäß einem der Ansprüche 13 bis 19, **dadurch gekennzeichnet, daß** die Zusammensetzung zumindest einen verstärkenden Füllstoff und gegebenenfalls zumindest ein Kupplungsmittel und/oder zumindest ein Überzugsmittel umfaßt.

**21.** Zusammensetzung gemäß einem der Ansprüche 13 bis 20, **dadurch gekennzeichnet, daß** die Zusammensetzung keinen Ruß enthält.

**22.** Zusammensetzung gemäß einem der Ansprüche 13 bis 21, **dadurch gekennzeichnet, daß** die Zusammensetzung zumindest ein organisches Antioxidationsmittel enthält.

**23.** Zusammensetzung gemäß einem der Ansprüche 13 bis 22, **dadurch gekennzeichnet, daß** die Zusammensetzung einen gewichtsbezogenen Gehalt an Titandioxidteilchen zwischen 0,5 und 8%, vorzugsweise zwischen 1 und 5%, aufweist.

**24.** Endprodukt auf Basis zumindest einer Zusammensetzung, wie in einem der Ansprüche 13 bis 23 definiert.

## Claims

**1.** The use as a UV stabilizer, in a rubber composition, of titanium dioxide particles having an average size of at most 80 nm and at least partially coated with a layer of at least one metal oxide, hydroxide or oxyhydroxide.

**2.** The use as claimed in claim 1, **characterized in that** said layer is a layer of at least one silicon and/or aluminum oxide, hydroxide or oxyhydroxide.

**3.** The use as claimed in claim 2, **characterized in that** said layer is formed from silica, an aluminosilicate or alumina.

**4.** The use as claimed in one of claims 1 to 3, **characterized in that** said titanium dioxide particles have an average size of between 20 and 70 nm, in particular between 30 and 60 nm.

**5.** The use as claimed in one of claims 1 to 4, **characterized in that** the titanium dioxide has a predominantly anatase crystal structure.

**6.** The use as claimed in one of claims 1 to 5, **characterized in that** said titanium dioxide particles have a BET specific surface area of at least 40 $m^2/g$, in particular at least 70 $m^2/g$.

**7.** The use as claimed in one of claims 1 to 6, **characterized in that** said particles are used in powder form.

**8.** The use as claimed in one of claims 1 to 7, **characterized in that** said rubber composition is based on at least one elastomer, said elastomer preferably having a glass transition temperature of between -150°C and +20°C.

**9.** The use as claimed in one of claims 1 to 8, **characterized in that** said rubber composition furthermore includes

at least one reinforcing filler and, optionally, at least one coupling agent and/or at least one coating agent.

**10.** The use as claimed in one of claims 1 to 9, **characterized in that** said rubber composition contains no carbon black.

**11.** The use as claimed in one of claims 1 to 10, **characterized in that** said rubber composition includes at least one organic antioxidant.

**12.** The use as claimed in one of claims 1 to 11, **characterized in that** the mass of titanium dioxide particles used is between 0.5 and 8%, preferably between 1 and 5%, of the total mass of said rubber composition.

**13.** A rubber composition based on at least one elastomer, containing at least one UV stabilizer, **characterized in that** said UV stabilizer consists of titanium dioxide particles having an average size of at most 80 nm and at least partially coated with a layer of at least one metal oxide, hydroxide or oxyhydroxide.

**14.** The composition as claimed in claim 13, **characterized in that** said layer is a layer of at least one silicon and/or aluminum oxide, hydroxide or oxyhydroxide.

**15.** The composition as claimed in claim 14, **characterized in that** said layer is formed from silica, an aluminosilicate or alumina.

**16.** The composition as claimed in one of claims 13 to 15, **characterized in that** said titanium dioxide particles have an average size of between 20 and 70 nm, in particular between 30 and 60 nm.

**17.** The composition as claimed in one of claims 13 to 16, **characterized in that** the titanium dioxide has a predominantly anatase crystal structure.

**18.** The composition as claimed in one of claims 13 to 17, **characterized in that** said titanium dioxide particles have a BET specific surface area of at least 40 $m^2/g$, in particular at least 70 $m^2/g$.

**19.** The composition as claimed in one of claims 13 to 18, **characterized in that** said composition is based on at least one elastomer having a glass transition temperature of between -150°C and +20°C.

**20.** The composition as claimed in one of claims 13 to 19, **characterized in that** said composition includes at least one reinforcing filler and, optionally, at least one coupling agent and/or at least one coating agent.

**21.** The composition as claimed in one of claims 13 to 20, **characterized in that** said composition contains no carbon black.

**22.** The composition as claimed in one of claims 13 to 21, **characterized in that** said composition includes at least one organic antioxidant.

**23.** The composition as claimed in one of claims 13 to 22, **characterized in that** said composition has a weight content of titanium dioxide particles of between 0.5 and 8%, preferably between 1 and 5%.

**24.** A finished article based on at least one composition as defined in one of claims 13 to 23.